# EUROPÄISCHE PATENTSCHRIFT

(11) **EP 3 449 726 B1**
(45) Veröffentlichungstag und Bekanntmachung des Hinweises auf die Patenterteilung: **05.02.2020**
(21) Anmeldenummer: 18189534.3
(22) Anmeldetag: 17.08.2018
(51) Int. Cl.: A21C 5/06

(54) **TEIGTEILVORRICHTUNG SOWIE TEIGBEARBEITUNGSANLAGE MIT EINER DERARTIGEN TEIGTEILVORRICHTUNG**
DOUGH DIVIDER AND DOUGH PROCESSING SYSTEM HAVING SUCH A DOUGH DIVIDER
DISPOSITIF DE DIVISION DE LA PÂTE AINSI QU'INSTALLATION DE TRAITEMENT DE LA PÂTE POURVUE D'UN TEL DISPOSITIF DE DIVISION DE LA PÂTE

(30) Priorität: 05.09.2017 DE 102017215606
(43) Veröffentlichungstag der Anmeldung: 06.03.2019
(73) Patentinhaber: Werner & Pfleiderer Lebensmitteltechnik GmbH, 91550 Dinkelsbühl (DE)
(72) Erfinder: Meier, Alexander, 91602 Dürrwangen (DE)
(74) Vertreter: Rau, Schneck & Hübner Patentanwälte Rechtsanwälte PartGmbB

(56) Entgegenhaltungen:
- AT-B- 380 625
- DE-A1- 3 116 454
- DE-A1- 3 826 934
- DE-A1- 19 640 176
- GB-A- 191 312 667

## Beschreibung

Die vorliegende Patentanmeldung nimmt die Priorität der deutschen Patentanmelding DE 102017215606.6 in Anspruch.

Die Erfindung betrifft eine Teigteilvorrichtung mit den im Oberbegriff des Anspruchs 1 angegebenen Merkmalen.

Eine derartige Teigteilvorrichtung ist bekannt aus der DE 42 43 840 A1, der DE 41 00 243 A1, der AT 380 625 B, der DE 38 26 934 A1, der DE 196 40 176 A1, der DE 1 256 172 A, der DE 31 16 454 A1 und der GB 12,667 A.

Es ist eine Aufgabe der vorliegenden Erfindung, eine Teigteilvorrichtung der eingangs genannten Art derart weiterzubilden, dass deren Portioniergenauigkeit verbessert ist.

Diese Aufgabe ist erfindungsgemäß gelöst durch eine Teigteilvorrichtung mit den im Anspruch 1 angegebenen Merkmalen.

Erfindungsgemäß wurde erkannt, dass eine Anordnung eines Entgasungskanals zwischen dem Förderkolben und einer Durchtrittskammerwand zu einer betriebssicheren Entgasung der Messkammer vorteilhaft geeignet ist.

Insbesondere kann ein unerwünschter Teigaustritt über den mindestens einen Entgasungskanal vermieden werden. Ein unerwünschter Lufteinschluss in der Messkammer wird vermieden, so dass die Portioniergenauigkeit erhöht ist. Die Teigteilvorrichtung und insbesondere der Förderkolben können derart ausgeführt sein, dass gleichzeitig mehrere Teig-Messkammern mit dem Förderkolben oder auch mit mehreren Förderkolben beschickt werden. Die Teigteilvorrichtung kann also mehrreihig ausgeführt sein und insbesondere Bestandteil einer entsprechend mehrreihigen Teigbearbeitungsanlage sein. Der Entgasungskanal kann zwischen einer Kolben-Mantelwand, also einem Kolbenschaft, des Förderkolbens und der Durchtrittskammerwand verlaufend angeordnet sein. Ein unerwünschter Teigaustritt über den Entgasungskanal zwischen dem Förderkolben und der Durchtrittskammerwand kann dadurch vermieden werden, dass gegebenenfalls durch den Entgasungskanal hindurchtretender Teig in Gegenrichtung der eigentlichen Teigförderung gefördert wird, in diesem Fall aber im Teig-Förderraum verbleibt. Ein unkontrollierter Teigaustritt ist vermieden.

Eine Mehrzahl von Entgasungskanälen nach Anspruch 2 hat sich als besonders geeignet herausgestellt. Ein im Betrieb auftretendes Verstopfen eines Entgasungskanals hat dann keine Auswirkungen auf die Entlüftungsfunktion. Die Anzahl der Entgasungskanäle pro Messkammer kann genau 1 betragen, kann mindestens 2 betragen, kann mindestens 5 betragen oder kann auch noch größer sein.

Ein Querschnitt des Entgasungskanals nach Anspruch 3 verhindert besonders effektiv ein unerwünschtes Durchtreten von Teig durch den Entgasungskanal und verhindert auch eine unerwünschte Verstopfung des Entgasungskanals. Der Querschnitt des Entgasungskanals kann kleiner sein als 8 mm², kann kleiner sein als 5 mm² und kann auch kleiner sein als 1 mm². Soweit mehrere Entgasungskanäle vorhanden sind, kann ein gesamter Querschnitt der Entgasungskanäle natürlich größer sein als 10 mm².

Eine Anordnung des Entgasungskanals nach Anspruch 4 stellt eine Entgasung dort sicher, wo Luftblasen im hin zur Messkammer mit dem Förderkolben geförderten Teig zu erwarten sind, sorgt also für eine besonders effektive Entgasung. Alternativ oder zusätzlich kann der mindestens eine Entgasungskanal auch im Bereich des unteren Durchtrittskammerwandabschnitts und/oder im Bereich mindestens eines der beiden seitlichen Durchtrittskammerwandabschnitte angeordnet sein.

Eine Ausführung des Entgasungskanals nach Anspruch 5 im Förderkolben ist herstellungstechnisch wenig aufwendig. Alternativ oder zusätzlich kann der mindestens eine Entgasungskanal in der Durchtrittskammerwand ausgeführt sei. Ein als Nut ausgeführter Entgasungskanal in der Förderkolben-Mantelwand und/oder in der Durchtrittskammerwand kann parallel zur Förderrichtung des Förderkolbens verlaufen. Dies ist allerdings nicht zwingend. Die Nut kann auch spiralförmig, zickzackförmig, schlangenförmig oder mit anderer Verlaufsform ausgeführt sein.

Eine Länge der Entgasungskanalnut nach Anspruch 6 ist zur sicheren Entgasung ausreichend. Länger muss die Nut nicht ausgeführt sein, was herstellungstechnische Vorteile hat.

Die Vorteile einer Teigbearbeitungsanlage nach Anspruch 7 entsprechen denen, die vorstehend unter Bezugnahme auf die Teigteilvorrichtung bereits erläutert wurden.

Ein Ausführungsbeispiel der Erfindung wird nachfolgend anhand der Zeichnung näher erläutert. In dieser zeigen:
- Fig. 1: einen Längsschnitt durch eine Teigteilvorrichtung;
- Fig. 2: eine Aufsicht auf einen Teig-Förderkolben der Teigteilvorrichtung;
- Fig. 3: eine Stirnansicht des Förderkolbens, gesehen aus Blickrichtung III in Fig. 2; und
- Fig. 4: eine perspektivische Ansicht des Förderkolbens.

Eine Teigteilvorrichtung 1 dient zum exakten Portionieren von Teiglingen, ausgehend von einer der Teigteilvorrichtung zugegebenen Teigmasse. Die Teigteilvorrichtung 1 hat ein Gehäuse 2.

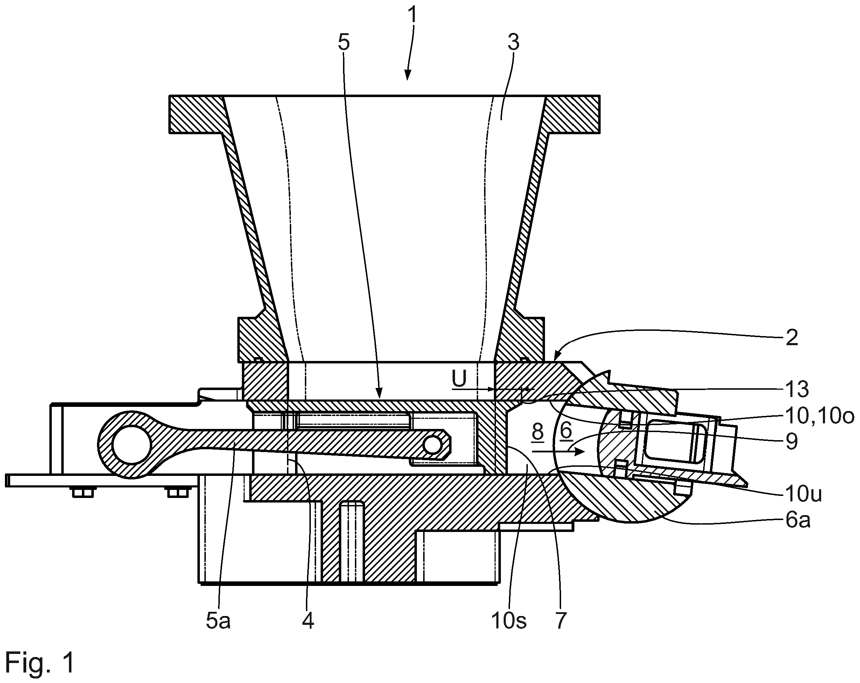

Ein als Zugabetrichter ausgeführter Teig-Zugaberaum 3 dient zum Zugeben des Teiges. Dem Teig-Zugaberaum 3 nachgeordnet ist eine Teig-Förderkammer 4. Gedachte seitliche Begrenzungen der Teig-Förderkammer 4 unterhalb des Teig-Zugaberaums 3 sind in der Fig. 1 gestrichelt dargestellt. Die Teig-Förderkammer 4 steht mit dem Teig-Zugaberaum 3 in gravimetrischer Förderverbindung.

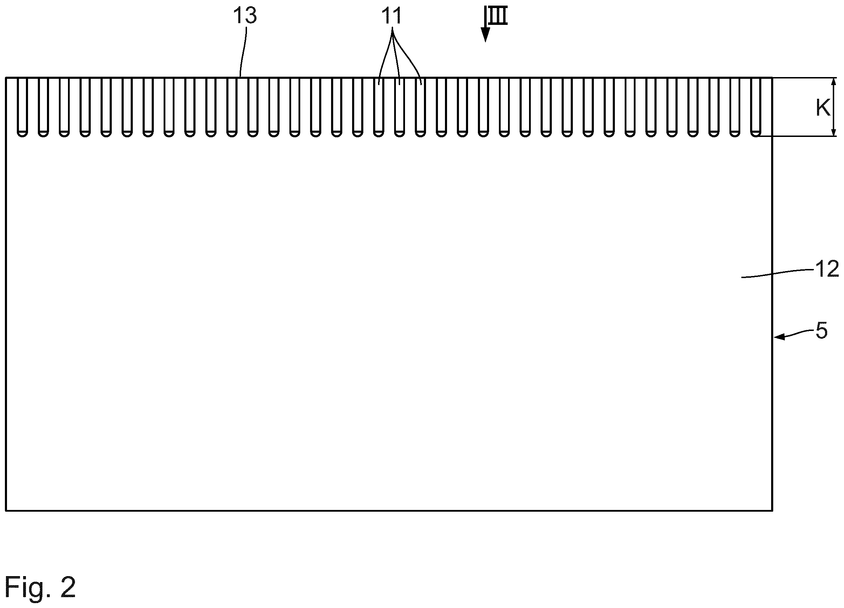

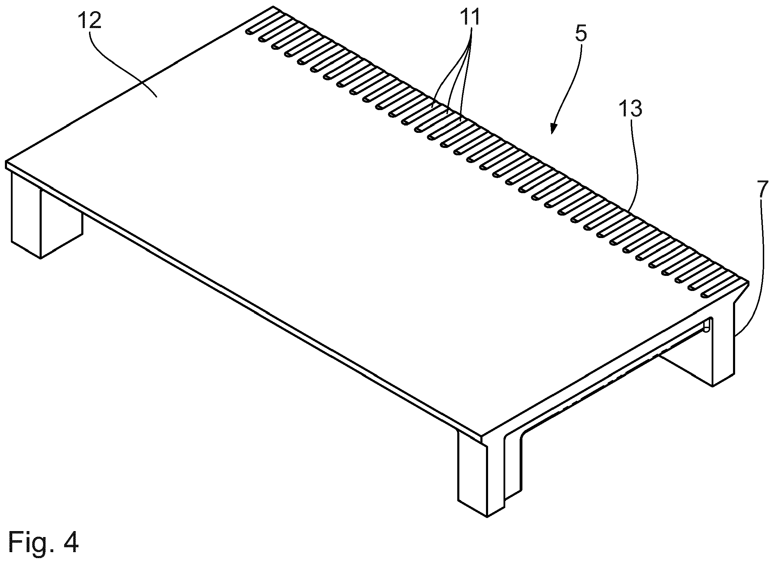

Ein Teig-Förderkolben 5 ist über einen Kurbeltrieb mit Antriebskurbel 5a angetrieben innerhalb der Förderkammer 4 zum Teigfördern verschiebbar angeordnet. Der Förderkolben 5 ist in den Fig. 2 bis 4 näher dargestellt und wird nachfolgend noch im Detail erläutert.

Über den Kurbeltrieb ist der Förderkolben 5 verlagerbar zwischen einer in der Fig. 1 dargestellten ausgefahrenen Zustell-Position und einer komplett aus der Förderkammer 4 zurückgezogenen Neutralposition, die in der Zeichnung nicht dargestellt ist.

Der Teig-Förderkammer 4 wiederum in Förderverbindung nachgeordnet ist eine Teig-Messkammer 6.

In der Zustell-Position des Förderkolbens 5 ist dessen stirnseitige Kolbenfläche 7 in einer Durchtrittskammer 8 zwischen der Förderkammer 4 und der Messkammer 6 angeordnet. Die Durchtrittskammer 8 ist in Bezug auf eine Teig-Förderrichtung 9 umlaufend begrenzt von einer um die Kolbenfläche 7 in der Zustell-Position umlaufenden Durchtrittskammerwand 10. Die umlaufende Durchtrittskammerwand 10 hat einen in Betriebsposition der Teigteilvorrichtung 1 oberen Durchtrittskammerwandabschnitt 10o, einen unteren Durchtrittskammerwandabschnitt 10u sowie zwei einander gegenüberliegende seitliche Durchtrittskammerwandschnitte 10s, von denen in der Fig. 1 der dem Betrachter zugewandte seitliche Durchtrittskammerwandabschnitt 10s sichtbar ist.

Die Messkammer 6 wird von einem um eine Achse, die senkrecht auf der Zeichenebene der Fig. 1 steht, schwenkbaren Messkammerzylinder 6a begrenzt.

Die vorstehend erläuterten Hauptkomponenten einer Teigteilvorrichtung 1 sind grundsätzlich aus dem Stand der Technik bekannt, beispielsweise aus der DE 42 43 840 A1, der DE 41 00 243 A1 und der DE 196 40 176 A1.

Der Förderkolben 5 kann gleichzeitig mehrere senkrecht zur Zeichenebene der Fig. 1 nebeneinander aufgereihte Messkammern 6 beschicken. Die Teigteilvorrichtung 1 ist Bestandteil einer entsprechend mehrreihigen Teigbearbeitungsanlage mit nachgeordneten weiteren Komponenten, beispielsweise einer Wirkvorrichtung und einer Gärvorrichtung, die in der Zeichnung näher dargestellt und grundsätzlich aus dem Stand der Technik bekannt sind. Alternativ kann die Teigteilvorrichtung 1 auch Bestandteil einer einreihigen Teigbearbeitungsanlage sein.

Die Teigteilvorrichtung 1 hat mindestens einen Entgasungskanal 11 (vgl. Fig. 2 bis 4) zum Entgasen der Messkammern 6. Tatsächlich hat die Teigteilvorrichtung 1 eine Vielzahl, nämlich in der dargestellten Ausführung 36 Entgasungskanäle 11. Die Entgasungskanäle 11 sind in der Zustellposition des Förderkolbens 5 zwischen der stirnseitigen Kolbenfläche 7 und der Durchtrittskammerwand 10, nämlich zwischen einer Mantelwand des Förderkolbens, also einem Kolbenschaft, und der Durchtrittskammerwand 10, angeordnet. Die Entgasungskanäle 11 schaffen in der Zustell-Position des Förderkolbens 5 eine Gasverbindung zwischen den Messkammern 6 und einer Umgebung, nämlich dem Teig-Zugaberaum 3.

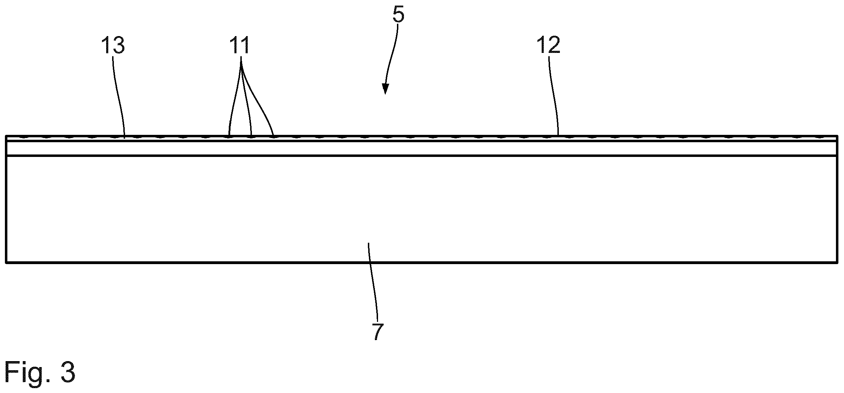

Die Entgasungskanäle 11 sind als Nuten in einer Mantelwand 12 des Förderkolbens 5 ausgeführt und münden in die Kolbenfläche 7 des Förderkolbens 5 aus (vgl. Fig. 3). Der jeweilige Entgasungskanal 11 mündet in die Kolbenfläche 7 über eine Kolbenflächen-Nutausmündung 13 aus.

Alternativ oder zusätzlich kann der mindestens eine Entgasungskanal in der Durchtrittskammerwand 10 ausgeführt sein.

Der mindestens eine Entgasungskanal 11 ist im Bereich des oberen Durchtrittskammerwandabschnitts 10o angeordnet. Alternativ oder zusätzlich kann der mindestens eine Entgasungskanal 11 im Bereich des unteren Durchtrittskammerwandabschnitts 10u und/oder im Bereich mindestens eines der beiden seitlichen Durchtrittskammerwandabschnitte 10s angeordnet sein.

Die Nut des jeweiligen Entgasungskanals 11 ist längs der Förderrichtung 9 des Förderkolbens 5 so lang, dass sie in der Zustell-Position des Förderkolbens 5 von der Kolbenflächen-Nutausmündung 13 bis zum Teig-Zugaberaum 3 verläuft.

Eine Kanallänge K (vgl. Fig. 2) der Entgasungskanäle 11 ist also länger als eine Überdeckung U des Förderkolbens 5 (vgl. Fig. 1) mit dem oberen Durchtrittskammerwandabschnitt 10o. Hierdurch ist eine sichere Gasverbindung zwischen der Messkammer 6 und der Umgebung bei den in der Fig. 1 dargestellten Positionen des Förderkolbens 5 und des Messkammerzylinders 6a geschaffen.

Es resultiert in diesen Positionen eine sichere Entlüftung der Messkammer 6 bei zur Portionierung in der Messkammer 6 komprimiertem Teig. Hierdurch ist eine exakte Portioniergenauigkeit gewährleistet.

Ein Querschnitt des jeweiligen Entgasungskanals 11 ist kleiner als 10 mm². Dies gewährleistet, dass nicht unerwünscht Teig durch die Entgasungskanäle 11 von der Durchtrittskammer 8 zurück in den Teig-Zugaberaum 3 gedrückt wird.

Zur Teigpositionierung steht der Förderkolben 5 zunächst in der komplett aus der Förderkammer 4 zurückgezogenen Neutralposition. Es wird dann von oben her, also vom Zugaberaum 3 her, Teig zugegeben. Der Förderkolben 5 wird dann mit Hilfe des Kurbeltriebs in die in der Fig. 1 gezeigte Zustell-Position verlagert, wodurch eine Teigportion in die Messkammer gefördert wird. Über die Entgasungskanäle 11 ist eine sichere Entlüftung der Messkammer 6 in den Teig-Zugaberaum 3 gewährleistet. Nun dreht der Messkammerzylinder 6a aus der in der Fig. 1 dargestellten Portionierposition in der Fig. 1 entgegen dem Uhrzeigersinn in eine Abgabeposition und gibt die Teigportion aus der Messkammer 6 hin zu einer nachgeordneten Teigbearbeitungskomponente der Teigbearbeitungsanlage, beispielsweise hin zu einer Wirkkammer einer Wirkvorrichtung.

Ein Querschnitt des jeweiligen Entgasungskanals 11 kann rund sein, kann eckig sein, kann oval sein, kann trapezförmig sein, kann mehreckig sein, kann die Form einer Ellipse oder eines Langlochs haben, kann schwalbenschwanzförmig sein, kann T-förmig sein und/oder kann die Form einer Trapeznut haben.

## Patentansprüche

1. Teigteilvorrichtung (1)
- mit einem Gehäuse (2),
- mit einem Teig-Zugaberaum (3) zum Zugeben von Teig,
- mit einer Teig-Förderkammer (4), die dem Zugaberaum (3) nachgeordnet ist und mit diesem in Förderverbindung steht,
- mit einem Teig-Förderkolben (5), der innerhalb der Förderkammer (4) zum Teigfördern angetrieben verschiebbar angeordnet ist,
- mit mindestens einer Teig-Messkammer (6), die der Teig-Förderkammer (4) nachgeordnet ist,
- wobei in einer ausgefahrenen Zustell-Position des Förderkolbens (5) dessen stirnseitige Kolbenfläche (7) in einer Durchtrittskammer (8) zwischen der Förderkammer (4) und der Messkammer (6) angeordnet ist, wobei die Durchtrittskammer (8) begrenzt ist von einer um die Kolbenfläche (7) umlaufenden Durchtrittskammerwand (10),
**gekennzeichnet durch**
- mindestens einen Entgasungskanal (11) zum Entgasen der Messkammer (6), der in der Zustell-Position des Förderkolbens (5) zwischen der Kolbenfläche (7) und der Durchtrittskammerwand (10) angeordnet ist und eine Gasverbindung zwischen der Messkammer (6) und einer Umgebung schafft.

2. Teigteilvorrichtung nach Anspruch 1, **gekennzeichnet durch** eine Mehrzahl von Entgasungskanälen (11).

3. Teigteilvorrichtung nach Anspruch 1 oder 2, **dadurch gekennzeichnet, dass** ein Querschnitt des Entgasungskanals (11) kleiner ist als 10 mm².

4. Teigteilvorrichtung nach einem der Ansprüche 1 bis 3, **dadurch gekennzeichnet, dass** die Durchtrittskammerwand (10)
- einen in Betriebsposition der Teigteilvorrichtung (1) oberen Durchtrittskammerwandabschnitt (100),
- einen in der Betriebsposition der Teigteilvorrichtung (1) unteren Durchtrittskammerwandabschnitt (10u),
- und zwei in der Betriebsposition der Teigteilvorrichtung (1) einander gegenüberliegende seitliche Durchtrittskammerwandschnitte (10s) aufweist,
- wobei der mindestens eine Entgasungskanal (11) im Bereich des oberen Durchtrittskammerwandabschnitts (10o) angeordnet ist.

5. Teigteilvorrichtung nach einem der Ansprüche 1 bis 4, **dadurch gekennzeichnet, dass** der mindestens eine Entgasungskanal (11) als Nut in einer Mantelwand (12) des Förderkolbens (5) ausgeführt ist.

6. Teigteilvorrichtung nach Anspruch 5, **dadurch gekennzeichnet, dass** die Nut in Förderrichtung (9) des Förderkolbens (5) so lang ist, dass sie in der Zustell-Position des Förderkolbens (5) von einer Kolbenflächen-Nutausmündung (13) bis zum Teig-Zugaberaum (3) verläuft.

7. Teigbearbeitungsanlage mit einer Teigteilvorrichtung (1) nach einem der Ansprüche 1 bis 6.

## Claims

1. Dough dividing device (1)
- with a housing (2),
- with a dough feed chamber (3) for feeding dough,
- with a dough delivery chamber (4), which is arranged downstream of the feed chamber (3) and is delivery communication with this,
- with a dough delivery piston (5), which is arranged in a displaceably driven manner inside the delivery chamber (4) for delivering dough,
- with at least one dough measuring chamber (6), which is arranged downstream of the dough delivery chamber (4),
- wherein in an extended delivery position of the delivery piston (5) its end-side piston face (7) is arranged in a passage chamber (8) between the delivery chamber (4) and the measuring chamber (6), wherein the passage chamber (8) is delimited by a wall (10) which extends circumferentially around the piston face (7),
**characterised by**
- at least one degassing channel (11), for degassing the measuring chamber (6), which in the delivery position of the delivery piston (5) is arranged between the piston face (7) and the passage-chamber wall (10) and creates a gas connection between the measuring chamber (6) and a surrounding area.

2. Dough dividing device according to Claim 1, **characterised by** a multiplicity of degassing channels (11).

3. Dough dividing device according to either of Claims 1 and 2, **characterised in that** a cross section of the degassing channel (11) is smaller than 10 mm².

4. Dough dividing device according to one of Claims 1 to 3, **characterised in that** the passage-chamber wall (10)
- has an upper wall section (10o) in the operating position of the dough dividing device (1),
- a lower wall section (10u) in the operating position of the dough dividing device (1),
- and two oppositely disposed side wall sections (10s) in the operating position of the dough dividing device (1),
- wherein the at least one degassing channel (11) is arranged in the region of the upper passage-chamber wall section (10o).

5. Dough dividing device according to one of Claims 1 to 4, **characterised in that** the at least one degassing channel (11) is designed as a groove in a casing wall (12) of the delivery piston (5).

6. Dough dividing device according to Claim 5, **characterised in that** the groove is of such length in the delivery direction (9) of the delivery piston (5) that it extends from a piston-face groove outlet (13) to the dough feed chamber (3) in the delivery position of the delivery piston (5).

7. Dough processing plant having a dough dividing device (1) according to one of Claims 1 to 6.

## Revendications

1. Dispositif de division de pâte (1)
- avec un logement (2),
- avec un compartiment d'ajout de pâte (3) pour ajouter de la pâte,
- avec une chambre de débit de pâte (4) qui est agencée après le compartiment d'ajout (3) et se trouve en liaison de débit avec celui-ci,
- avec un piston de débit de pâte (5) qui, entraîné pour débiter une pâte, est agencé de façon coulissante à l'intérieur de la chambre de débit (4),
- avec au moins une chambre de mesure de pâte (6) qui est agencée après la chambre de débit de pâte (4),
- dans lequel, dans une position de distribution déployée du piston de débit (5), la surface de piston (7) côté frontal est agencée dans une chambre de passage (8) entre la chambre de débit (4) et la chambre de mesure (6), dans lequel la chambre de passage (8) est délimitée par une paroi de chambre de passage (10) encerclant la surface de piston (7),
**caractérisé par**
- au moins un canal de dégazage (11) pour dégazer la chambre de mesure (6), lequel est agencé dans la position de distribution du piston de débit (5) entre la surface de piston (7) et la paroi de chambre de passage (10) et établit une liaison de gaz entre la chambre de mesure (6) et un environnement.

2. Dispositif de division de pâte selon la revendication 1, **caractérisé par** une pluralité de canaux de dégazage (11).

3. Dispositif de division de pâte selon la revendication 1 ou 2, **caractérisé en ce qu'**une coupe transversale du canal de dégazage (11) est inférieure à 10 mm².

4. Dispositif de division de pâte selon l'une des revendications 1 à 3, **caractérisé en ce que** la paroi de chambre de passage (10) présente
- une partie de paroi de chambre de passage supérieure (10o) en position de fonctionnement du dispositif de division de pâte (1),
- une partie de paroi de chambre de passage inférieure (10u) en position de fonctionnement du dispositif de division de pâte (1),
- et deux parties de paroi de chambre de passage latérales (10s) opposées l'une à l'autre en position de fonctionnement du dispositif de division de pâte (1),
- dans lequel le au moins un canal de dégazage (11) est agencé dans la région de la partie de paroi de chambre de passage supérieure (100).

5. Dispositif de division de pâte selon l'une des revendications 1 à 4, **caractérisé en ce que** le au moins un canal de dégazage (11) est réalisé en tant que rainure dans une paroi d'enveloppe (12) du piston de débit (5).

6. Dispositif de division de pâte selon la revendication 5, **caractérisé en ce que** la rainure dans la direction de débit (9) du piston de débit (5) est suffisamment longue pour, dans la position de distribution du piston de débit (5), se dérouler depuis une embouchure de rainure de surface de piston (13) et jusqu'au compartiment d'ajout de pâte (3).

7. Installation de travail d'une pâte avec un dispositif de division de pâte (1) selon l'une des revendications 1 à 6.
